# EUROPÄISCHE PATENTSCHRIFT

(11) **EP 1 967 893 B1**
(45) Veröffentlichungstag und Bekanntmachung des Hinweises auf die Patenterteilung: **06.07.2011**
(21) Anmeldenummer: 08003835.9
(22) Anmeldetag: 29.02.2008
(51) Int. Cl.: G02C 11/06, H04R 25/00

(54) **Knochenleitungsmodul zum Aufsetzen auf eine Brille, Knochenleitungshörgerät-Brille mit einem derartigen Modul und Verfahren zu ihrer Herstellung**
Bone conduction module for attaching on an eye glass, bone conduction hearing aid eye glass with such a modul and method for the production of the bone conduction hearing aid eye glass
Module à conduction osseuse pour fixation sur des lunettes, lunettes d'appareil auditif à conduction osseuse avec un tel module et procédé de fabrication des lunettes d'appareil auditif à conduction osseuse

(30) Priorität: 03.03.2007 DE 102007010374
(43) Veröffentlichungstag der Anmeldung: 10.09.2008
(73) Patentinhaber: Bruckhoff Apparatebau GmbH, 30159 Hannover (DE)
(72) Erfinder: Bruckhoff, Henning, 30159 Hannover (DE)
(74) Vertreter: Bremer, Ulrich

(56) Entgegenhaltungen:
- WO-A-2006/028045
- WO-A-2007/069784
- WO-A-2007/105372
- JP-A- 2004 320 605
- JP-A- 2006 157 318

## Beschreibung

Die Erfindung betrifft eine Knochenleitungsmodul zum Aufsetzen auf eine Brille, eine Knochenleitungshörgerät-Brille mit einem derartigen Knochenleitungsmodul und ein Verfahren zu ihrer Herstellung.

Bei Patienten, bei denen das Innenohr noch intakt oder weitgehend intakt ist, das Mittelohr oder der Gehörgang wegen z. B. einem Verschluss die Anwendung eines Luftleitungshörgerätes mit akustischem Hörer aber nicht gestatten, können zum Teil Knochenleitungshörgeräte verwendet werden, bei denen die Schalleinleitung von außen über einen Vibrations-Konduktor auf einen Knochen des Schädels, im Allgemeinen den Mastoiden, erfolgt. Der Konduktor muss hierbei mit einer geeigneten Anpresskraft von im Allgemeinen größer/gleich 100 g an den Knochen gedrückt werden.

Bei Knochenleitungshörgerät-Brillen ist das Knochenleitungshörgerät im Allgemeinen in einem Brillenbügel untergebracht ist. Die Knochenleitungshörgerät-Brillen werden insbesondere wegen der geringen Stückzahlen von Herstellern standardisiert gefertigt; sie erlauben somit dem Benutzer nicht eine individuelle Auswahl des Designs und werden oftmals als unmodisch empfunden. Die benutzerspezifische Anpassung zum einen der Längeneinstellung des Funktionsbügels mit dem Vibrations-Konduktor und zum anderen die Anpassung in der Weite mit der Einstellung der Anpresskraft werden im Allgemeinen über eine Anpasshilfe vorgenommen, die zwischen dem Funktionsbügel und dem Optikgestell, das die Linsen aufnimmt, angeordnet ist und ein spezielles Bügelschamier erfordert.

Die Anpassung des Funktionsbügels der Knochenleitungshörgerät-Brille erfolgt in der Regel, indem der aus einem speziellen Kunststoff gefertigte Funktionsbügel zunächst auf eine genau vorgegebene Temperatur erwärmt wird, wodurch der Kunststoff aufweicht. Diese Temperatur darf nicht überschritten werden, da hierdurch ihre irreversible Beschädigungen des Bügels auftreten. Der aufgeweichte Funktionsbügel wird nachfolgend von einem Fachmann richtig gebogen und nachfolgend erkaltet.

Herkömmliche Knochenleitungshörgerät-Brillen sind somit in der Herstellung und insbesondere in der Anpassung an den Benutzer aufwendig und kostspielig und erfordern spezielle Fachkenntnisse. Weiterhin ist das Design vom Hersteller im Wesentlichen vorgegeben und gestattet im Allgemeinen keine individuellen Wünsche des Benutzers.

Die WO2006/028045 A zeigt eine Knochenleitungshörgerät-Brille, die ein Optikgestell zur Aufnahme von Brillengläsern, zwei gegenüber dem Optikgestell einklappbarer Bügel und ein Vibrationshörgerät zeigt. Ein Bügel ist hierbei als Funktionsbügel ausgebildet, an dem das Knochenleitungshörgerät mit einem Vibrationskonduktor und einem elastischen Konduktorträger aufweist.

Die JP 2006157318 A beschreibt eine Brille mit Optikgestell und Bügeln, wobei am Ende eines Bügels ein Knochenleitungshörgerät angebracht ist.

Die JP 2004320605 A beschreibt ein Hörgerät an dem Bügel einer Brille angebracht ist. Das Hörgerät ist hierbei in Längsrichtung des Bügels gleitfähig und weiterhin um den Bügel drehbar angebracht.

Der Erfindung liegt die Aufgabe zugrunde, ein Knochenleitungsmodul, eine Knochenleitungshörgerät-Brille und ein Verfahren zu deren Herstellung zu schaffen, die eine kostengünstige Herstellung bei genauer und guter Anpassbarkeit an die Anatomie des Benutzers und eine individuelle Auslegung des Designs ermöglichen.

Diese Aufgabe wird durch ein Knochenleitungsmodul nach Anspruch 1, eine Knochenleitungshörgerät-Brille nach Anspruch 12 und ein Verfahren nach Anspruch 15 gelöst. Die Unteransprüche beschreiben bevorzugte Weiterbildungen.

Erfindungsgemäß wird somit bei einer Brille ohne weitere spezielle Anforderungen ein Bügel gekürzt, so dass ein Bügelansatz verbleibt, der durch Anbringung eines erfndungsgemäßen Knochenleitungsmoduls zu einem Funktionsbügel ausgebildet wird. Das Knochenleitungsmodul weist hierbei einen Befestigungsbereich zur Anbindung des Bügelansatzes, einen elastischen Konduktorträger und einen verstellbaren Bügelbereich auf. Der Bügelbereich dient der Funktion des Löffelendes einer Bügelbrille, d.h. der Anlage am Außenohr des Benutzers zur Justierung des Optikgestells. Der elastische Konduktorträger kann insbesondere als sich von den Befestigungsbereich länglich nach hinten erstreckender Ast ausgebildet sein und ermöglicht eine Einstellung der elastischen Anpresskraft des an seinem Ende vorgesehenen Vibrations-Konduktors an dem Mastoiden.

Der Konduktorträger ist hierbei hinreichend elastisch, so dass er die Anpresskraft von z.B. größer/gleich 100g aufbringt; er ist weiterhin - durch Überschreiten seiner elastischen Streckgrenze - kaltverformbar zur Einstellung an die Anatomie des Benutzers und der elastischen Anpresskraft.

Erfindungsgemäß kann somit eine vom Benutzer frei auswählbare, herkömmliche Brille, z.B. auch seine vorher verwendete Brille oder eine von ihm individuell ausgesuchte, als modisch und ästhetisch bewertete Brille mit hinreichender Steifigkeit herangezogen und durch entsprechendes Kürzen eines der Bügel verwendet werden. Indem der Bügelansatz auf eine geeignete Länge gekürzt wird, erfolgt eine individuelle Anpassung der Bügellänge an die Anatomie des Benutzers, ohne das hierfür eine komplizierte Anpasshilfe erforderlich ist. Da auch die Einstellung der Anpresskraft durch Kaltverformung des elastischen Konduktorträgers mit relativ geringem Aufwand auch bei geringen Fachkenntnissen leicht und dennoch sicher vorgenommen werden kann, ist die gesamte Einstellung schnell, sicher und mit geringen Fachkenntnissen durchführbar.

Somit sind erfindungsgemäß auch Positionen einstellbar, die bei herkömmlichen Systemen nur schlecht einstellbar sind, z. B. nach einer Radikaloperation, von der auch die Position des Mastoid betroffen sein kann.

Das Knochenleitungsmodul kann standardisiert hergestellt werden. Die bei herkömmlichen durch Erwärmung einzustellenden Bügeln auftretende Gefahr einer Beschädigung tritt erfindungsgemäß nicht mehr auf.

Die elektronischen Bauteile, insbesondere ein Mikrofon, ein Verstärker und gegebenenfalls manuelle Einstelleinrichtungen und/oder eine Schnittstelle, z.B. Anschlussbuchse für eine externe Steuereinrichtung zur Programmierung, können insbesondere am Bügelbereich vorgesehen sein. Diese Bauteile sind somit im Allgemeinen hinter dem Außenohr kaum oder nur gering erkennbar.

Der Konduktorträger und der Bügelbereich verlaufen vorteilhafterweise von dem Bügelbereich länglich nach hinten. Der Befestigungsbereich kann insbesondere als Kammer zur Aufnahme eines inneren Führungsdrahtes des gekürzten Bügels vorgesehen sein. Somit kann der Ausgangsbügel der Brille passend abgelängt werden, wobei der innere Führungsdraht mit einem freien Ende vorsteht und nachfolgend an der Befestigungskammer befestigt wird.

Erfindungsgemäß sind vorteilhafterweise am Optikgestell zwei Scharniere vorgesehen, an denen die gegenüber dem Optikgestell einklappbaren Bügel befestigt sind, wobei der Bügelensatz am Scharnier angebracht ist. Hierbei können die Scharniere auch als Biegebereiche ohne direkte Gelenkfunktion ausgebildet sein.

Erfindungsgemäß kann der Bügelbereich insbesondere am Außenohr des Benutzers anliegen, wobei er bogenförmig gekrümmt um das Außenohr gelegt werden kann oder auch z. B. geradlinig, d.h. nach Art einer Steckbrille, aufgesetzt werden kann. Hierbei können die beiden Äste wahlweise unten oder oben, d.h. je nach Ausbildung der Konduktorträger mit dem Vibrations-Konduktor oben und der Bügelbereich unten oder umgekehrt der Konduktorträger mit dem Vibrations-Konduktor unten und der Bügelbereich oben angeordnet sein. Diese Variabilität und Freiheit in der Auslegung stellt hierbei einen weiteren Vorteil der Erfindung dar. Hierbei wird der mit der Anlagekraft am Kopf des Benutzers anliegende Konduktor erfindungsgemäß vorteilhafterweise auch zur Anlage bzw. Fixierung des Funktionsbügels sowie der gesamten Hörgeräts-Brille beitragen, wodurch eine sichere Fixierung erreicht wird.

Die beiden insbesondere von der Befestigungskammer ausgehenden Äste, d.h. der Bügelbereich und der Vibrationsträger, können insbesondere als Metallrohre ausgebildet sein. Diese beiden Metallrohre können hierbei z. B. durch Laserschweißung an der Befestigungskammer angebracht sein. Die Ausbildung als Metallrohre erhöht hierbei die Masse der beiden Äste, ohne die Gesamtmasse der Hörgerät-Brille wesentlich zu erhöhen. Durch die Erhöhung der Masse der beiden Äste zusammen mit der Ausbildung der Befestigungskammer aus Metall kann eine hinreichende Masse dieses Bereichs gebildet werden, die zum Abfangen der Schwingungen des Vibrators hilfreich ist.

Erfindungsgemäß kann das Knochenleitungsmodul insbesondere auch autark ohne eine über den Bügel verlaufende Leitung ausgebildet werden, wie es bei herkömmlichen Hörgerät-Brillen in der Regel der Fall ist. Erfindungsgemäß werden hierdurch die Problematik der Kontaktierung des Funktionsbügels an dem Bügelansatz und mögliche Beschädigungen einer zusätzlichen Leitung bzw. Kabels vermieden.

Der Vibrations-Konduktor kann erfindungsgemäß mit einer flexiblen, nachgiebigen Anlagefläche ausgestattet sein, z. B. über eine kardanische Aufhängung, Kugelgelenk-Kugelpfannen-Anbindung oder auch durch Ausbildung der Anbindung mit einem Elastomer. Vorteilhafterweise weist die Elastomer-Anbindung eine hinreichende Shore-Härte auf, um den Anpressdruck an den Knochen zu ermöglichen bzw. bei dem Anpressdruck an den Knochen eine Vibrationsübertragung ohne relevante Verluste zu erreichen, ist aber flexibel in zwei Kipprichtungen, d.h. vorteilhafterweise um zwei Drehachsen senkrecht zur Anlagerichtung bzw. Druckübertragungsrichtung, um die Anpassung an den Knochen zu ermöglichen.

Weiterhin kann der Vibrations-Konduktor oder dessen Anlagestück mit der Anlagefläche erfindungsgemäß längsverschiebbar und in den Längspositionen arretierbar oder selbstarretierend auf dem Konduktorträger aufgenommen sein. Hierbei kann der Vibrator z. B. mit einer Hülse oder Muffe ausgebildet sein, die auf dem als Metallrohr ausgebildeten Konduktorträger längsverschiebbar und arretierbar angebracht ist.

Die Erfindung wird im Folgenden anhand der beiliegenden Zeichnungen an einer Ausführungsform erläutert. Es zeigen:

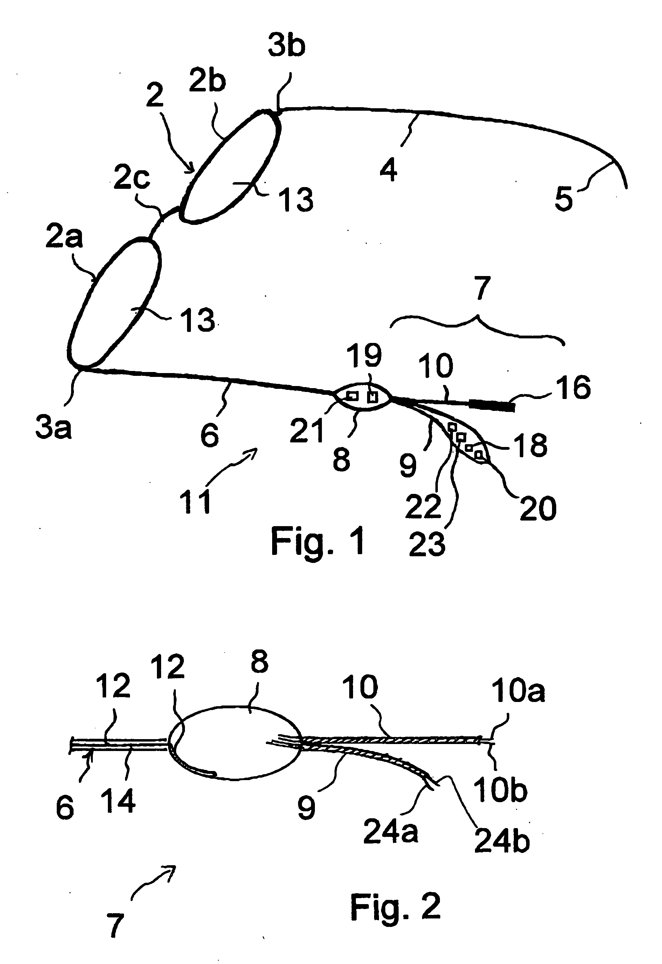

- Fig. 1: eine Knochenleitungshörgerät-Brille gemäß eine Ausführungsform in perspektivischer Ansicht;
- Fig. 2: den Anbindungsbereich des Knochenleitungsmoduls aus Fig. 1 im Schnitt;
- Fig. 3: eine zu Fig. 1 alternative Ausführungsform;
- Fig. 4: eine Detailansicht des Vibrationskonduktors gemäß einer Ausbildung in perspektivischer Ansicht.

Eine Knochenleitungshörgerät-Brille 1 weist ein Optikgestell 2 aus z.B. Metall oder Kunststoff mit zwei Glasfassungen 2a, 2b, einem die Glasfassungen 2a, 2b verbindenden Nasenbügel 2c und seitlich einem linken Scharnier 3a sowie einem rechten Scharnier 3b auf. Die Glasfassungen 2a, 2b können die Gläser 13 hierbei ganz umfassen oder - je nach gewünschtem Design - auch nur teilweise umrahmen, so dass die Gläser 13 eine tragende Funktion haben können.

In dem rechten Scharnier 3b ist in bekannter Weise ein rechter Bügel 4 mit einem rechten Ohrhaken 5 bzw. Ohrlöffel ausgebildet und in dem Scharnier 3b nach innen klappbar. An dem linken Scharnier 3a ist der linke Bügel zu einem linken Bügelansatz 6 verkürzt. Der linke Bügelansatz 6 entspricht somit dem vorderen Teil des rechten Bügels 4 und ist vom Aufbau und Design her identisch. Erfindungsgemäß ist am hinteren Ende des linken Bügelansatzes 6 ein Knochenleitungsmodul 7 befestigt, das eine Befestigungskammer 8, einen Bügelast 9 und einen Konduktorträger 10 aufweist. Der linke Bügelansatz 6 und das Knochenleitungsmodul 7 bilden zusammen den Funktionsbügel 11.

Der Bügelast 9 ist kaltverformbar und dient der mechanischen Fixierung und Justierung des Optikgestells 2, d.h. er entspricht in seiner Funktion dem Ohrhaken 5 bzw. Löffelende auf des rechten Bügels 4. Der Bügelast 9 ragt somit z. B. schräg nach unten und hinten weg, im Allgemeinen - aber nicht notwendigerweise - mit einer noch unten offenen Krümmung zum Erfassen des linken Außenohrs des Benutzers

Die Befestigungskammer 8 dient zunächst der Befestigung des Knochenleitungsmoduls 7 am linken Bügelansatz 6. Sie kann insbesondere aus Metall oder einem anderen festen Material wie z. B. auch Kunststoff hergestellt sein. Falls der linke Bügelansatz 6 - und entsprechend auch der rechte Bügel 4 - einen inneren Führungsdraht 12 und einen umgebenen Mantel 14 aus z.B. Kunststoff aufweist, kann eine stabile Anbringung der Befestigungskammer 8 am Bügelansatz 6 erfolgen, indem der innere Führungsdraht 12 an oder in der Befestigungskammer 8 angebracht wird, z.B. durch Formschluss, d.h. Einhängen, und/oder Löten, Kleben oder ähnlichem.

Der Bügelast 9 und der Konduktorträger 10 können direkt von der Befestigungskammer 8 ausgehen oder sich nachfolgend verzweigen. Beide Äste 9, 10 sind kaltverformbar zur mechanischen Fixierung. Sie können insbesondere als Metallrohre ausgebildet sein, die an der vorzugsweise mit Metallgehäuse ausgebildeten Befestigungskammer 8 angebracht sind. Am Ende des Konduktorträgeres 10 ist ein Vibrations-Konduktor 16 angebracht, der gegen einen Kopfknochen des Benutzers, im Allgemeinen den Mastoid, gedrückt wird und mit einem Anlagedruck von z.B. 100 Gramm eine direkte Schallübertragung ins Innenohr ermöglicht. Der Vibrations-Konduktor 16 ist hierbei insbesondere längsverschiebbar auf dem Konduktorträger 10 befestigt und in den Längspositionen arretierbar oder selbstarretierend, um eine individuelle Positionierung auch bei Verwendung standartisierter Funktionsmodule 7 zu ermöglichen.

In dem Konduktorträger 10 verlaufen z. B. zwei oder mehr elektrische Leitungen 10a, 10b für die Signalübertragung zu dem Vibrations-Konduktor 16. Vorteilhafterweise ist am Ende des Bügelastes 9 ein Funktionsgehäuse 18 angebracht, in dem elektrische Komponenten untergebracht sind. Erfindungsgemäß können die elektrischen Komponenten, d.h. insbesondere ein oder mehrere Mikrofone 19, ein Verstärker 20 zur Verstärkung der von dem mindestens einen Mikrofon 19 ausgegebenen Schallsignale, eine Batterie 23 zur Stromversorgung, ein Taster 21 oder andere manuell bedienbare Stelleinrichtung sowie eine Anschlussbuchse für eine Programmierung über eine externe Steuereinrichtung oder gegebenenfalls eine andere Schnittstelle, wahlweise jeweils im Funktionsgehäuse 18 oder in der Befestigungskammer 8 untergebracht sein, so dass sich vielfältige Kombinationen ergeben und der zur Verfügung stehende Raum gut ausgenutzt werden kann. So können z. B. das mindestens eine Mikrofon 19 und der Taster 21 in der Befestigungskammer 8, andere Komponenten in dem Funktionsgehäuse 18 untergebracht sein. Hierbei verläuft eine geeignete Anzahl, z. B. zwei oder mehr elektrische Leitungen 24a, b von dem Funktionsgehäuse 18 z.B. zu der Befestigungskammer 8, von der aus die Leitungen 10a,b zu dem Vibrations-Konduktor 16 verlaufen.

Der Benutzer kann somit die Knochenleitungshörgerät-Brille 1 wie eine normale Brille aufsetzen und gegebenenfalls den rechten Ohrhakens 5 (Löf felende) und den Bügelast 9 für einen passendes Sitz des Optikgestells 2 einstellen. Nachfolgend kann der Benutzer den erforderlichen Andruck des Vibrations-Konduktors 16 durch Kaltverformung, d.h. Biegen des Konduktorträgeres 10 und somit ohne Erwärmung oder weitere, komplizierte Maßnahmen einstellen. Hierzu wird bei abgenommener Knochenleitungshörgerät-Brille 1 der Konduktorträger 10 über seine Elasitzitätsgrenze hinaus gebogen, so dass eine andere Biegestellung erreicht wird.

Die Herstellung der Knochenleitungshörgerät-Brille 1 kann vorteilhafterweise erfolgen, indem eine Brille des Benutzers, die anatomisch geeignet ist und ihm auch ästhetisch gefällt, herangezogen wird, und in einem ersten Schritt der linke Bügel zu dem Bügelansatz 6 verkürzt wird, d.h. das linke Löffelende abgeschnitten wird. Hierbei kann der innere Führungsdraht 12 länger abgelängt werden, und nachfolgend die Befestigungskammer 8 an dem inneren Führungsdraht 12 befestigt werden. Der Benutzer stellt nachfolgend den linken Bügelast 9 anatomisch geeignet ein und kann nachfolgend durch mechanisches Kaltverformen des Konduktorträgeres 10 den erforderlichen Anpressdruck von 100 g einstellen.

Auch in dem Bügelast 9 sowie dem Konduktorträger 10 können ein oder mehrere innere Führungsdrähte zusätzlich zu den Leitungen 10a,b und 24a,b vorgesehen, oder es werden innere Führungsdrähte auch als jeweils eine Leitung verwendet. Weiterhin kann in dem Konduktorträger 10 z. B. auch ein elastisches, bei größerer Kraftaufwendung kalt verformbares Metallröhrchen vorgesehen sein, z. B. mit Kunststoffüberzug, wobei die elektrischen Leitungen 10a, b in dem Metallröhrchen verlaufen können.

Für eine Reparatur kann das gesamte Knochenleitungsmodul 7 ausgetauscht werden, oder z.B. bei einer Beschädigung des Optikgestells 2 auch ein neues Optikgestell 2 herangezogen und durch Kürzen des linken Bügels verwendet werden.

Weiterhin kann auch eine stereofone Schallwiedergabe erfolgen, indem beide Bügel als Funktionsbügel 11 ausgebildet sind.

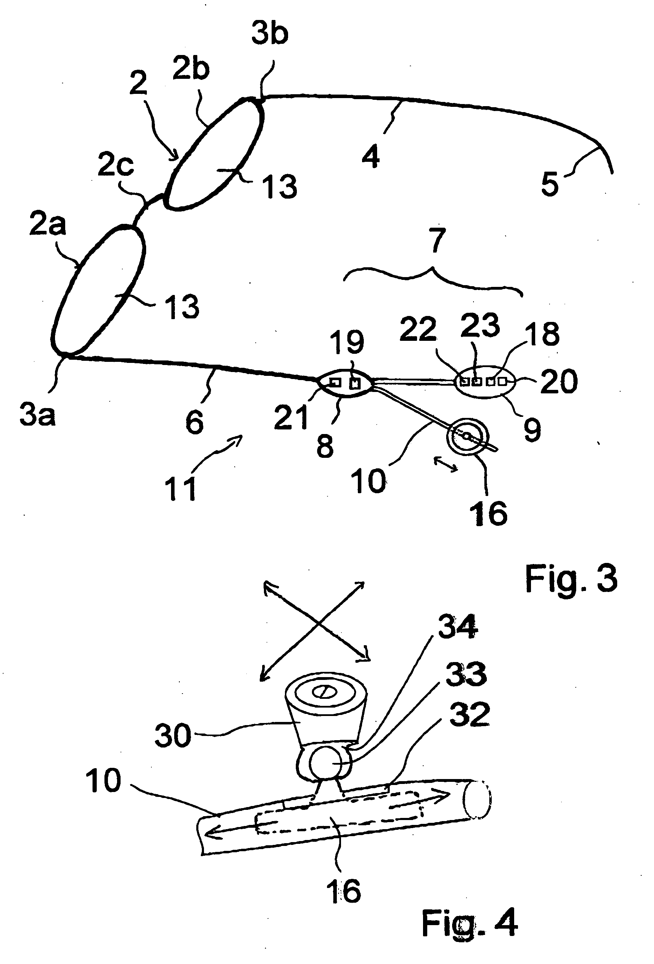

Fig. 3 zeigt eine weitere Ausführungsform, bei der der Konduktorträger 10 unten und der Bügelast 9 oben angeordnet sind, wobei hier der Bügelast 9 z. B. geradlinig oder leicht gekrümmt verlaufen kann, z. B. nach Art einer Steckbrille.

Der Vibrations-Konduktor 16 kann bei allen Ausführungsformen längsverschiebbar auf dem Konduktorträger 10 aufgenommen sein, wie es beispielhaft in Fig. 3 und 4 gezeigt ist. Hierzu kann der Vibrations-Konduktor 16 als Rohrstück, z. B. Muffe oder Hülse, auf dem als Metallrohr ausgebildeten Konduktorträger 10 aufgesetzt sein. Alternativ hierzu kann der Vibrations-Konduktor 16 auch wie in Fig. 4 gezeigt in dem als Metallrohr ausgebildeten Konduktorträger 10 aufgenommen sein und z. B. mit einem Ansatz oder dem Anlagestück bzw. einer Anbindung des Anlagestückes aus einem Schlitz 32 aus dem Konduktorträger 10 herausragen.

Das Anlagestück 30 ist vorteilhafterweise um zwei Achsen kippbar, die senkrecht zur Anlagerichtung bzw. zur Vibrationsübertragungsrichtung oder Krafteinleitungsrichtung liegen, wodurch erfindungsgemäß eine gute Anpassbarkeit an die Anatomie des Kopfes des Benutzers geschaffen wird. Hierzu ist eine in Vibrationsübertragungsrichtung steife und in den Achsen kippbare Anbindung 33, 34 des Anlagestücks 30 am Vibrations-Konduktor 16 vorgesehen, die z. B. durch ein Kardangelenk, eine Kugelpfannen-Kugelkopf-Anbindung mit Kugelkopf 33 und Kugelpfanne 34 oder auch durch eine E-lastomeranbindung aus einem Elastomer mit einer hohen Shore-Härte und einem Gelenkbereich 33, 34 erreicht werden kann.

## Patentansprüche

1. Knochenleitungsmodul (7) zum Aufsetzen auf eine Brille, die ein Optikgestell (2) zur Aufnahme von Brillengläsern (13) und einen durch Kürzen eines Bügels erzeugten Bügelansatz (6) aufweist,
wobei das Knochenleitungsmodul (7) aufweist:
eine Befestigungseinrichtung (8) zur Befestigung an dem Bügelansatz (6),
einen elastischen Konduktorträger (10) mit einem Vibrations- Konduktor (16) und
einen verstellbaren Bügelbereich (9) zur Anlage am Kopf des Benutzers.

2. Knochenleitungsmodul nach Anspruch 1, **dadurch gekennzeichnet, dass** in dem Bügelbereich (9) oder in der Befestigungseinrichtung (8) eine Batterie (23), ein Verstärker (20) und eine manuell bedienbare Stelleinrichtung (21) und/oder eine Schnittstelle zum Anschluss an eine externe Steuereinrichtung vorgesehen sind.

3. Knochenleitungsmodul nach Anspruch 2, **dadurch gekennzeichnet, dass** in der Befestigungseinrichtung (8) oder im Bügelbereich (9) ein Mikrofon (19) zur Aufnahme von Schallwellen und Abgabe elektrischer Signale an die Verstärkereinrichtung vorgesehen ist.

4. Knochenleitungsmodul nach einem der vorherigen Ansprüche, **dadurch gekennzeichnet, dass** der Konduktorträger (10) kaltverformbar zur Einstellung einer Anlagekraft des Vibrations-Konduktors (16) ist.

5. Knochenleitungsmodul nach einem der vorherigen Ansprüche, **dadurch gekennzeichnet, dass** der Bügelbereich (9) zur Anlage am Außenohr des Benutzers vorgesehen ist.

6. Knochenleitungsmodul nach Anspruch 5, **dadurch gekennzeichnet, dass** der Bügelbereich (9) kaltverformbar ist.

7. Knochenleitungsmodul nach Anspruch 4 oder 6, **dadurch gekennzeichnet, dass** der Konduktorträger (10) und/oder der Bügelbereich (9) als Metallrohr ausgebildet ist.

8. Knochenleitungsmodul nach einem der vorherigen Ansprüche, **dadurch gekennzeichnet, dass** der Bügelbereich (9) und der Konduktorträger (10) von der Befestigungseinrichtung (8) ausgehen und sich länglich nach hinten erstrecken.

9. Knochenleitungsmodul nach einem der vorherigen Ansprüche, **dadurch gekennzeichnet, dass** der Befestigungseinrichtung (8) als Befestigungskammer aus z.B. Metall oder Kunststoff ausgebildet ist.

10. Knochenleitungsmodul nach einem der vorherigen Ansprüche, **dadurch gekennzeichnet, dass** an dem Vibrations-Konduktor (16) ein Anlagestück (30) mit einer Anbindung (33, 34) anbracht ist, die eine Verstellung um zwei Achsen oder in einer Ebene senkrecht zur Vibrationsübertragungsrichtung zulässt.

11. Knochenleitungsmodul nach Anspruch 10, **dadurch gekennzeichnet, dass** die Anbindung ein Kardangelenk, Elastomer-Gelenk (33, 34) oder Kugelkopf-Kugelpfannen-Gelenk (33, 34) aufweist.

12. Knochenleitungshörgerät-Brille (1), die aufweist:
ein Optikgestell (2) zur Aufnahme von Brillengläsern (13),
einen durch Kürzen eines Bügels erzeugten Bügelansatz (6) und
ein Knochenleitungsmodul (7) nach einem der vorherigen Ansprüche,
das an dem Bügelansatz (6) befestigt ist.

13. Knochenleitungshörgerät-Brille nach Anspruch 12, **dadurch gekennzeichnet, dass** der Bügelansatz (6) einen inneren Führungsdraht (12) aufweist, der an der Befestigungseinrichtung (8) befestigt, z.B. eingehängt ist.

14. Knochenleitungshörgerät-Brille nach Anspruch 12 oder 13, **dadurch gekennzeichnet, dass** der Bügelansatz (6) und ein vorderer Bügelbereich (4a) eines anderen Bügels (4) identisch oder im Wesentlichen identisch ausgebildet sind.

15. Verfahren zum Herstellen einer Knochenleitungshörgerät-Brille, mit mindestens folgenden Schritten:
Bereitstellen einer Brille mit einem Optikgestell (2) und zwei über Scharniere (3a, 3b) mit dem Optikgestell (2) verbundenen Bügeln (4),
Kürzen mindestens eines der Bügel zu einem Bügelansatz (6) Befestigen eines Knochenleitungsmoduls (7) an dem mindestens einen Bügelansatz (6),
wobei das Knochenleitungsmodul (7) eine Befestigungseinrichtung (8) zur Befestigung an dem Bügelansatz (6), einen elastischen Konduktorträger (10) mit dem Vibrations-Konduktor (16) und einen verstellbaren Bügelbereich (9) zur Anlage am Außenohr des Benutzers aufweist.

16. Verfahren nach Anspruch 15, **dadurch gekennzeichnet, dass** beim Kürzen des Bügels zu dem Bügelansatz (6) ein innerer Führungsdraht (12) freistehend abgelängt und nachfolgend an der Befestigungseinrichtung (8) befestigt wird.

## Claims

1. Bone-conduction module (7) for mounting onto spectacles that exhibit an optics frame (2) for accepting spectacle lenses (13) and that exhibit a sidepiece appendage (6) produced by shortening a sidepiece,
the bone-conduction module (7) exhibiting:
a fastening device (8) for fastening to the sidepiece appendage (6),
an elastic conductor support (10) with a vibration conductor (16) and
an adjustable sidepiece region (9) for abutment against the head of the user.

2. Bone-conduction module according to Claim 1, **characterised in that** in the sidepiece region (9) or in the fastening device (8) a battery (23), an amplifier (20) and a manually operated positioning device (21) and/or an interface for coupling to an external control device are provided.

3. Bone-conduction module according to Claim 2, **characterised in that** in the fastening device (8) or in the sidepiece region (9) a microphone (19) for receiving sound-waves and for emitting electrical signals to the amplifier device is provided.

4. Bone-conduction module according to one of the preceding claims, **characterised in that** the conductor support (10) is capable of being deformed in the cold state for the purpose of setting an abutment force of the vibration conductor (16).

5. Bone-conduction module according to one of the preceding claims, **characterised in that** the sidepiece region (9) is provided for abutment against the outer ear of the user.

6. Bone-conduction module according to Claim 5, **characterised in that** the sidepiece region (9) is capable of being deformed in the cold state.

7. Bone-conduction module according to Claim 4 or 6, **characterised in that** the conductor support (10) and/or the sidepiece region (9) take(s) the form of a metal tube.

8. Bone-conduction module according to one of the preceding claims, **characterised in that** the sidepiece region (9) and the conductor support (10) emanate from the fastening device (8) and extend rearwards in elongated manner.

9. Bone-conduction module according to one of the preceding claims, **characterised in that** the fastening device (8) takes the form of a fastening chamber consisting, for example, of metal or plastic.

10. Bone-conduction module according to one of the preceding claims, **characterised in that** there is fitted to the vibration conductor (16) an abutment piece (30) with a linkage (33, 34) that permits an adjustment about two axes or in a plane perpendicular to the vibration-transmission direction.

11. Bone-conduction module according to Claim 10, **characterised in that** the linkage exhibits a universal joint, an elastomer joint (33, 34) or a ball-and-socket joint (33, 34).

12. Bone-conduction hearing-aid spectacles (1) that exhibit:
an optics frame (2) for accepting spectacle lenses (13),
a sidepiece appendage (6) produced by shortening a sidepiece and
a bone-conduction module (7) according to one of the preceding claims, which is fastened to the sidepiece appendage (6).

13. Bone-conduction hearing-aid spectacles according to Claim 12, **characterised in that** the sidepiece appendage (6) exhibits an inner guide wire (12) which is fastened to the fastening device (8), for example is hitched onto it.

14. Bone-conduction hearing-aid spectacles according to Claim 12 or 13, **characterised in that** the sidepiece appendage (6) and a front sidepiece region (4a) of another sidepiece (4) are formed identically or substantially identically.

15. Process for manufacturing bone-conduction hearing-aid spectacles, with at least the following steps:
providing spectacles having an optics frame (2) and two sidepieces (4) connected to the optics frame (2) via hinges (3a, 3b),
shortening at least one of the sidepieces to form a sidepiece appendage (6),
fastening a bone-conduction module (7) to the at least one sidepiece appendage (6),
the bone-conduction module (7) exhibiting a fastening device (8) for fastening to the sidepiece appendage (6), an elastic conductor support (10) with the vibration conductor (16), and an adjustable sidepiece region (9) for abutment against the outer ear of the user.

16. Process according to Claim 15, **characterised in that** in the course of shortening the sidepiece to form the sidepiece appendage (6) an inner guide wire (12) is cut to length in free-standing manner and is subsequently fastened to the fastening device (8).

## Revendications

1. Module de conduction osseuse (7) destiné à être posé sur une paire de lunettes présentant une monture optique (2), qui reçoit les verres à lunettes (13), et une base de branche (6) obtenue en raccourcissant une branche, le module de conduction osseuse (7) présentant:
un dispositif de fixation (8) servant à la fixation sur la base de branche (6),
un support élastique de conducteur (10) avec un conducteur de vibrations (16)
et
une zone de branche réglable (9) destinée à être posée sur la tête de l'utilisateur.

2. Module de conduction osseuse (7) suivant la revendication 1, **caractérisé en ce qu'**une pile (23), un amplificateur (20) et un dispositif de réglage actionnable manuellement (21) et/ou une interface pour le raccordement à un dispositif de commande externe sont prévus dans la zone de branche élastique (9) ou dans le dispositif de fixation (8).

3. Module de conduction osseuse (7) suivant la revendication 2, **caractérisé en ce qu'**un microphone (19) destiné à recevoir des ondes sonores et à envoyer des signaux électriques au dispositif d'amplification est prévu dans le dispositif de fixation (8) ou dans la zone de branche (9).

4. Module de conduction osseuse suivant une des revendications précédentes, **caractérisé en ce que** le support de conducteur (10) est déformable à froid pour le réglage de la force d'application du conducteur de vibrations (16).

5. Module de conduction osseuse suivant une des revendications précédentes, **caractérisé en ce que** la zone de branche (9) est destinée à être posée sur l'oreille externe de l'utilisateur.

6. Module de conduction osseuse suivant la revendication 5, **caractérisé en ce que** la zone de branche (9) est déformable à froid.

7. Module de conduction osseuse suivant la revendication 5, **caractérisé en ce que** le support de conducteur (10) et/ou la zone de branche (9) est/sont conçus en tube métallique.

8. Module de conduction osseuse suivant la revendication 4 ou 6, **caractérisé en ce que** la zone de branche (9) et le support de conducteur (10) s'étendent de façon longitudinale depuis le dispositif de fixation (8) vers l'arrière.

9. Module de conduction osseuse suivant une des revendications précédentes, **caractérisé en ce que** le dispositif de fixation (8) est conçu comme chambre de fixation par exemple en métal ou en matière artificielle.

10. Module de conduction osseuse suivant une des revendications précédentes, **caractérisé en ce qu'**une pièce d'appui (30) avec un raccordement (33, 34) permettant un réglage autour de deux axes ou sur un plan perpendiculaire à la direction de transmission des vibrations est montée sur le conducteur de vibrations (16).

11. Module de conduction osseuse suivant la revendication 10, **caractérisé en ce que** le raccordement présente une articulation à cardan, une articulation élastomère (33, 34) ou une articulation à embout et butée sphériques (33, 34).

12. Lunettes auditives en conduction osseuse (1) présentant:
une monture optique (2) qui reçoit les verres à lunettes (13), une base de branche (6) obtenue en raccourcissant une branche et un module de conduction osseuse (7) suivant une des revendications précédentes, module qui est fixé sur la base de branche (6).

13. Lunettes auditives en conduction osseuse suivant la revendication 12, **caractérisées en ce que** la base de branche (6) présente un fil de guidage interne (12) qui est fixé, par exemple suspendu, au dispositif de fixation (8).

14. Lunettes auditives en conduction osseuse suivant la revendication 12 ou 13, **caractérisées en ce que** la base de branche (6) et une zone avant (4a) d'une autre branche (4) sont conçues de façon identique ou essentiellement identique.

15. Procédé de fabrication de lunettes auditives en conduction osseuse comprenant au moins les étapes suivantes :
Mise à disposition d'une paire de lunettes avec une monture optique (2) et
deux branches (4) reliées à la monture optique (2) via deux charnières (3a, 3b), raccourcissement d'au moins une des branches de manière à ne laisser qu'une base de branche (6), fixation d'un module de conduction osseuse (7) sur l'au moins une base de branche (6),
le module de conduction osseuse (7) présentant un dispositif de fixation (8) pour la fixation à la base de branche (6), un support élastique de conducteur (10) avec le conducteur de vibrations (16) et une zone de branche réglable (9) destinée à être posée sur l'oreille externe de l'utilisateur.

16. Procédé suivant la revendication 15, **caractérisé en ce que** lors du raccourcissement de la branche ne laissant que la base de branche (6), un fil de guidage interne (12) est librement coupé à longueur, puis fixé au dispositif de fixation (8).
